# EUROPEAN PATENT APPLICATION

(11) **EP 4 647 529 A2**
(43) Date of publication of application: **12.11.2025**
(21) Application number: 25172380.5
(22) Date of filing: 24.04.2025
(51) Int. Cl.: C23F 13/18, B29C 33/00, F28F 19/00

(54) **SACRIFICIAL ANODE FOR THE CATHODIC PROTECTION OF COOLING SYSTEMS**

(30) Priority: 09.05.2024 PT 2024119459
(71) Applicant: Sociedade Metalúrgica A. Fonseca & Flora, 4465-732 Leca do Balio (PT)
(72) Inventor: PAULO CERQUEIRA DUARTE, ANTÓNIO, 4465-732 LEÇA DO BALIO 4465-732 (PT)
(74) Representative: Couto, Cláudia

(57) **Abstract**

The present application discloses a sacrificial anode suitable for the cathodic protection of cooling systems. This sacrificial anode prevents or delays the occurrence of stress corrosion phenomena that leads to the damage of devices dependent on cooling systems, such as injection moulds, as well as preventing the deposition of minerals in cooling channels. Other uses include for example cooling systems of vessel engines.

This sacrificial anode comprises a new configuration for a pencil-type, uses new materials in its constitution and adds a new use for these anodes, i.e. use in colling systems of plastic injection moulds.

The sacrificial anode comprises a coupling between a threaded plug (2) and a rod (3) made of a sacrificial alloy material.

## Description

### Technical field

This application relates to a sacrificial anode suitable for the cathodic protection of cooling systems.

### Background art

The use of sacrificial anodes is widespread for the protection of fresh, brackish, and saltwater vessels. Their use also applies to other, structures, pipelines and tanks, and it is common to apply sacrificial anodes for cathodic protection of metals, typically steel, copper, and aluminium alloys, used in the hulls, rudders, propellers, shafts and tanks of vessels. Its use is also associated with applications in hot and cold water and fuel tanks, as well as in submerged or underground structures and pipework.

Anodes are also used in the cooling systems of vessels and their engines, being applied to seawater intakes and to the channels and cooling systems of the engines themselves. In the latter application, pencil-type anodes are used. These conventional anodes are made of zinc with a brass head and are tightened with a spanner, screwed into bushes welded to the pipes or tightened into holes drilled in the engines themselves. This solution causes the coolant circulating in the channels to come into contact with the zinc part of the anode, leading to its deterioration by galvanic corrosion (the anode is sacrificed to the detriment of the metal it is intended to protect). In this way, the interior walls of the cooling system are protected from corrosion - cathodically.

Mould cooling circuits are based on drilling straight channels parallel to the mould's joint plane, passing close to the moulding surface. These holes intersect with other holes perpendicular to them, so that a certain water circulation circuit can be established inside the mould. To prevent the water from spilling outside the mould, part of the channels are plugged with standard plugs, and part of these holes remain unplugged so that the water can flow in and out of the circuits to the cooling system (chiller). There are often several circuits for each mould, so that the cold water reaches different areas of the mould cavities (moulding surfaces).

Currently there is no cathodic protection of the inside of the cooling channels of plastic injection moulds, so the moulds fail depending on the number of injection cycles, the injection effort and the geometry designed for the cavities, moving elements and cooling posts.

In terms of cathodic protection applied to injection moulds, there is document CN208232245, which refers to the application of an anode placed in a groove next to the cavity in order to protect the respective surfaces against corrosion. However, this document in no way conflicts with the present invention because the cathodic protection is applied to protect different areas of the mould and the solution is completely different. The anodes disclosed in this document and the present invention differ in configuration and application.

Pencil-type anodes were described in document US 2947680 with cylindrical elements successively threaded together, followed by document US 3423305 with a single head and body threaded together and assembled by spanner. These anodes are used to protect cooling areas and are threaded (by the plug) into a bushing or housing in engines or pipework through which liquids that are corrosive to steel pass. The present invention is a substantial improvement over the sacrificial anodes described in the previously mentioned documents.

Plastic injection moulds have various cooling circuits with varying diameters and are plugged with British Standard Pipe (BSP), British Standard Pipe Taper (BSPT), American taper pipe thread (N-PT) threaded plugs for tightening in the moulds. The typical thread sizes for the plugs are: 1/8"; ¼";⅜"; ½"; and ¾" and it is common in the mould industry for cooling circuits to be drilled with groove diameters of, for example, 7, 9, 11... 21 mm. The number of channels and their length are adapted to the geometry and dimensions of the mould, and it is up to the designers to define the respective sizing in order to allow faster injection times.

The reason why the present invention was not developed sooner is that the field of shipbuilding and underground metal construction is very different from the mould industry. In the mould industry there is a lack of knowledge about the failure mechanisms that occur in moulds; and in the cathodic protection industry there is a lack of knowledge about the failures that occur in moulds. As a result, it has not been possible to design solutions to avoid or minimise the phenomenon of catastrophic failure due to stress corrosion in moulds, as well as the phenomena of limescale and sludge deposition in cooling channels.

In addition, this type of corrosion problem in injection moulds is not as serious as in steel used in vessels and underground metals, since failure does not occur in most production situations, only in those corresponding to longer production runs, or in moulds with less robust geometries. Proper treatment of the cooling water also helps to delay the progress of corrosion inside the moulds, so that stress corrosion fracture does occur in many moulds in service, but not all of them.

### Summary

The present application relates to a sacrificial anode (1) suitable for the cathodic protection of cooling systems comprising:
a threaded plug (2) with a length between 7 and 45 mm, an orifice (2.2) arranged at a first end and suitable to receive an Allen wrench, and a threaded orifice (2.1) arranged at a second end opposite to the first end;
a rod (3) with a length between 20 and 200 mm, comprising a threaded end (3.1) coupled to the threaded plug (2) via the threaded orifice (2.1); and
wherein the rod (3) is made of a material selected from aluminium alloy, zinc alloy or magnesium alloy.

In one embodiment the orifice (2.2) has a diameter between 4 and 18 mm.

In one embodiment the orifice (2.2) has a depth between 5 and 25 mm.

In one embodiment the threaded orifice (2.1) has a depth between 4 and 25 mm.

In one embodiment the rod (3) has a diameter between 6 and 20 mm.

In one embodiment the threaded orifice (2.1) comprises internal threads that are complementary to the external threaded end (3.1) of the rod (3).

In one embodiment the dimensions of the threaded orifice **(2.1)** are selected from **1/8", 1/4", 3/8", 1/2" or 3/4".**

In one embodiment the threaded plug (2) is made of a material selected from mild steel, stainless steel or brass.

In one embodiment the rod (3) is made of magnesium alloy when the cooling fluid is fresh water or treated water.

In one embodiment the rod (3) is made of aluminium alloy when the cooling fluid is brackish water.

In one embodiment the rod (3) is made of aluminium alloy or zinc alloy when the cooling fluid is salted water.

In one embodiment the sacrificial anode (1) is for use in cooling systems of plastic injection moulds, die-casting moulds, plastic thermoforming moulds, blow moulds, plastic extrusion dies, cooling systems and channels for machinery, vehicles, tools, devices dependent on cooling systems.

### General description

In the present application, a new configuration is disclosed for a sacrificial anode, both in the design of the plug and in the preferential use of alloys as the material for the rod of the anode.

With the presently disclosed sacrificial anode, a new use can also be achieved for this type of anode: the protection of cooling systems of plastic injection moulds. Stress corrosion failure, a failure mechanism that limits the life of these moulds, proved to be a second source of motivation and inspiration for the development of the presently disclosed cathodic protection solution.

The present invention takes advantage of an electrochemical principle in which two metallic materials of a different nature, when in contact with each other, promote accelerated corrosion in one of the metals and a significant reduction in the corrosion rate of the other metal.

The present invention proposes the fitting of specially designed pencil-type anodes. In these sacrificial anodes, the traditional spanner plug is replaced by a plug that can be placed in the cooling channel, without having to change the usual procedures for plugging the water/coolant passage.

In the present solution, the consumable part of the anode, i.e., the rod, comes into direct contact with the corrosive fluid (the coolant), making an electrical connection to the inner walls of the cooling channels of the cooling system via the anode's threaded plug with an Allen wrench. This ensures cathodic protection of the inside of the channels where stress corrosion and mineral deposits occur.

Another new feature of the present invention is the use of pencil-shaped anodes. The sacrificial anode is suitable to prevent or reduce the rate of corrosion of cooling systems, i.e., the channels.

When injection moulding is considered, the corrosion that occurs in the mould cooling circuits when combined with mechanical stresses imposed by successive injection cycles leads to stress corrosion, which causes the mould to break catastrophically and end its life.

The use of the present sacrificial anode in plastic injection moulds results in the delay or prevention of corrosion phenomena, which lead to loss of productivity and rendering the mould unusable due to catastrophic failure, putting an end to its use in the injection of plastic parts and forcing the production of a new mould to replace it.

There are two major benefits to cathodic protection of plastic injection moulds. The main one is that the corrosion rate of the steel inside the cooling channels of the cooling system is significantly reduced and the formation of mineral deposits inside the cooling circuits is prevented.

The second benefit has to do with combating stress corrosion. This form of corrosion leads to the appearance of cracks on the surface of the cooling channels and their progression to the molding surface, thus imposing damage in the mould cavity. This type of phenomenon occurs through the initiation of cracks, which slowly progress due to the combined action of corrosion and mechanical stress, imposing a faster progression of cracks, since corrosion occurs simultaneously with the application of mechanical stress, degrading the ends of the cracks formed, causing the cracks to progress more quickly as the stress is exerted on the crack ends with each loading cycle (opening of the crack front due to the simultaneous action of corrosion and mechanical stress).

The present application discloses a novel configuration and dimensions of a sacrificial anode comprising an alloy rod screwed into a plug, which dissolve in the treated cooling water (i.e., cooling fluid) over a period of at least 2 years, which is equivalent to continuous use of an injection mould, thereby cathodically protecting the steel in the cooling circuits against corrosion.

Besides finding use in the cooling system of plastic injection moulds, the present sacrificial anode can also be used for cathodic protection of other cooling systems since the sacrificial anode (1) is suitable for use in the cathodic protection, such as, but not limited to, die-casting moulds, plastic thermoforming moulds, blow moulds, plastic extrusion dies, cooling systems and channels in general for machinery, vehicles, tools, engines and devices dependant on cooling systems.

### Brief description of drawings

For easier understanding of this application, figures are attached in the annex that represent the preferred forms of implementation which nevertheless are not intended to limit the technique disclosed herein.
Figures 1 shows the configuration of the sacrificial anode (1).
Figure 2 shows the sacrificial anode (1): (2) the threaded plug and (3) the rod.
Figure 3 shows the two-dimensional sectional view of the sacrificial anode (1).

### Detailed description of embodiments

Now, preferred embodiments of the present application will be described in detail with reference to the annexed drawings. However, they are not intended to limit the scope of this application.

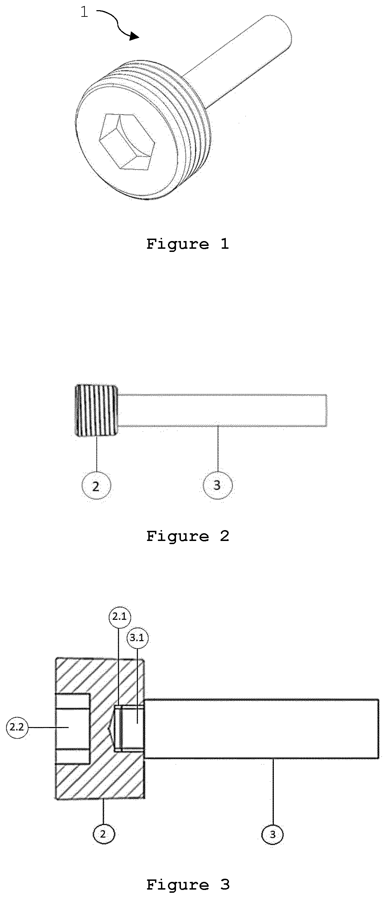

Figures 1, 2 and 3 show the configuration of the sacrificial anode (1). Figures 2 and 3 illustrate the sacrificial anode (1) of this invention, showing the components of the anode: the threaded plug (2) and the rod (3).

The present invention relates to a sacrificial anode (1) suitable for the cathodic protection of cooling systems comprising:
a threaded plug (2) with a length between 7 and 45 mm, an orifice (2.2) arranged at a first end and suitable to receive an Allen wrench, and a threaded orifice (2.1) arranged at a second end opposite to the first end;
a rod (3) with a length between 20 and 200 mm, comprising a threaded end (3.1) coupled to the threaded plug (2) via the threaded orifice (2.1).

In one embodiment, orifice (2.2) has a diameter (i.e., key size) between 4 and 18 mm.

In one embodiment, orifice (2.2) has a depth between 5 and 25 mm.

In one embodiment, the threaded orifice (2.1) has a depth between 4 and 25 mm.

In one embodiment, the rod (3) has a diameter between 6 and 20 mm.

In one embodiment, the threaded orifice (2.1) comprises internal threads that are complementary to the external threaded end (3.1) of the rod (3).

In one embodiment, the dimensions (BSP, BSPT and n-PT) in inches of the threaded orifice (2.1) can be selected from, but not limited to, 1/8", 1/4", 3/8", 1/2" or +-+-+-+-3/4".

The dimensions provided herein are subject to an error margin of ± 2 mm.

Examples of dimensions for the threaded plug (2) and rod (3) are disclosed in Tables 1 and 2. These dimensions are presented in relation to the standard dimensions of some cooling channels for which the sacrificial anode (1) is intended.

The dimensions shown in Tables 1 and 2 are solely understood as examples, and do not exclude other combinations of diameters and lengths within the disclosed ranges above in which the sacrificial anode (1) can be produced.

In general terms, the threaded plug (2) has a length that is at least 5 mm greater than the standards currently used in the industry in order to accommodate the threaded orifice (2.1) that allows parts (2) and (3) to be coupled. The length of the threaded plug (2) herein proposed allows to arrange a threaded orifice (2.1) in it on the opposite side of the orifice (2.2) which is suitable to receive an Allen wrench; and to be able to screw and couple the rod (3) on the threaded plug (2).

**Table 1. Dimensions of the threaded plug (2) of the present invention.**

| **Threaded plug (2)** | | | |
|---|---|---|---|
| Threaded orifice (2.1) (inches) | Orifice (2.2) (mm) | Length of plug (2) (mm) | Cooling channel diameter (mm) |
| 1/8" | 4 to 7 (preferably 5) | 7 to 34 (preferably 12) | 7-8 |
| 1/4" | 5 to 10 (preferably 7) | 10 to 40 (preferably 15) | 8-10 |
| 3/8" | 5 to 12 (preferably 8) | 10 to 40 (preferably 15) | 11-14 |
| 1/2" | 5 to 16 (preferably 10) | 10 to 40 (preferably 15) | 11-17 |
| 3/4" | 5 to 18 (preferably 12) | 12 to 45 (preferably 17) | > 21 |

**Table 2. Dimensions of the rod (3) of the present invention.**

| **rod (3)** | | |
|---|---|---|
| Threaded end (3.1) (mm) | Embodiment 1 Ø x length (mm) | Embodiment 2 Ø x length (mm) |
| 4xM5 | 6 x between 20 and 50 (preferably 40) | 6 x between 51 and 200 (preferably 70) |
| 4xM5 | 7.5 x between 20 and 50 (preferably 40) | 7.5 x between 51 and 200 (preferably 70) |
| 4xM5 | 10 x between 20 and 50 (preferably 40) | 10 x between 51 and 200 (preferably 70) |
| 4xM5 | 12 x between 20 and 50 (preferably 40) | 12 x between 51 and 200 (preferably 70) |
| 6xM10 | 15 x between 20 and 50 (preferably 40) | 15 x between 51 and 200 (preferably 70) |
| 6xM10 | 20 x between 20 and 50 (preferably 40) | 20 x between 51 and 200 (preferably 70) |

In one embodiment, the rod (3) is made of aluminium alloy, zinc alloy or magnesium alloy. For the purpose of the present invention, the alloys herein disclosed are those having a composition suitable for cathodic protection.

In one embodiment, magnesium alloy is preferably used when the cooling fluid is fresh water or treated water.

In one embodiment, aluminium alloy is preferably used when the cooling fluid is brackish water.

In one embodiment, aluminium alloy or zinc alloy is preferably used when the cooling fluid is salted water.

The aluminium alloy has the right characteristics for cathodic protection, while magnesium sacrificial alloys are suitable for use in the type of fresh water for cooling moulds.

In one embodiment, the threaded plug (2) is made of a material selected from, but not limited to, mild steel, stainless steel or brass, depending on user preference.

In one embodiment, the rod (3) has a smooth cylindrical section, threaded at one end.

The novelty introduced by the present invention refers to the preferential use of aluminium or magnesium sacrificial alloys to produce the rod (3), as well as zinc alloys.

The dimensioning of the threaded plug (2) and rod (3) shown in Tables 1 and 2 can vary, always maintaining the configuration shown in Figures 1, 2 and 3, but having different measurements within the ranges discloses herein, depending on the suitability of the sacrificial anode for the type of cathodic protection solution intended, for a more specific case of use.

The sacrificial anode (1) disclosed is suitable for use in cooling systems of a plastic injection mould.

Additionally, the sacrificial anode (1) can also be used in other cooling applications where the cooling circuits are plugged with plugs (2) with different types of threads that are also tightened with ALLEN wrenches.

In general, the sacrificial anode (1) is suitable for use in the cathodic protection of cooling systems of plastic injection moulds, die-casting moulds, plastic thermoforming moulds, blow moulds, plastic extrusion dies, cooling systems and channels in general for machinery, vehicles, tools, devices dependent on cooling systems.

This description is of course not in any way restricted to the forms of implementation presented herein and any person with an average knowledge of the area can provide many possibilities for modification thereof without departing from the general idea as defined by the claims. The preferred forms of implementation described above can obviously be combined with each other. The following claims further define the preferred forms of implementation.

## Claims

1. A sacrificial anode (1) suitable for the cathodic protection of cooling systems comprising:
a threaded plug (2) with a length between 7 and 45 mm, an orifice (2.2) arranged at a first end and suitable to receive an Allen wrench, and a threaded orifice (2.1) arranged at a second end opposite to the first end;
a rod (3) with a length between 20 and 200 mm, comprising a threaded end (3.1) coupled to the threaded plug (2) via the threaded orifice (2.1); and
wherein the rod (3) is made of a material selected from aluminium alloy, zinc alloy or magnesium alloy.

2. The sacrificial anode (1) according to the previous claim wherein the orifice (2.2) has a diameter between 4 and **18 mm.**

3. The sacrificial anode (1) according to any of the previous claims wherein the orifice (2.2) has a depth between 5 and 25 mm**.**

4. The sacrificial anode (1) according to any of the previous claims wherein the threaded orifice (2.1) has a depth between 4 and 25 mm.

5. The sacrificial anode (1) according to any of the previous claims wherein the rod (3) has a diameter between 6 and 20 mm.

6. The sacrificial anode (1) according to any of the previous claims wherein the threaded orifice (2.1) comprises internal threads that are complementary to the external threaded end (3.1) of the rod (3).

7. The sacrificial anode (1) according to any of the previous claims wherein the dimensions of the threaded orifice **(2.1)** are selected from 1/8", 1/4", 3/8", 1/2" or **3/4".**

8. The sacrificial anode (1) according to any of the previous claims wherein the threaded plug (2) is made of a material selected from mild steel, stainless steel or brass.

9. The sacrificial anode (1) according to any of the previous claims wherein the rod (3) is made of magnesium alloy when the cooling fluid is fresh water or treated water.

10. The sacrificial anode (1) according to any of the previous claims wherein the rod (3) is made of aluminium alloy when the cooling fluid is brackish water.

11. The sacrificial anode (1) according to any of the previous claims wherein the rod (3) is made of aluminium alloy or zinc alloy when the cooling fluid is salted water.

12. Use of the sacrificial anode (1) described in any of the previous claims in cooling systems of plastic injection moulds, die-casting moulds, plastic thermoforming moulds, blow moulds, plastic extrusion dies, cooling systems and channels for machinery, vehicles, tools, devices dependent on cooling systems.
